# EUROPÄISCHE PATENTSCHRIFT

(11) **EP 0 864 164 B1**
(45) Veröffentlichungstag und Bekanntmachung des Hinweises auf die Patenterteilung: **09.01.2002**
(21) Anmeldenummer: 97944682.0
(22) Anmeldetag: 02.09.1997
(51) Int. Cl.: H01F 17/06, H03H 1/00

(54) **STROMKOMPENSIERTE FUNKENTSTÖRDROSSEL MIT ERHÖHTER STREUINDUKTIVITÄT**
CURRENT-COMPENSATED RADIO INTERFERENCE SUPPRESSION REACTOR WITH INCREASED LEAKAGE INDUCTANCE
BOBINE D'ANTIPARASITAGE A COMPENSATION DE COURANT A INDUCTANCE DE FUITE ACCRUE

(30) Priorität: 16.09.1996 DE 19637733
(43) Veröffentlichungstag der Anmeldung: 16.09.1998
(73) Patentinhaber: Vacuumschmelze GmbH, 63450 Hanau (DE)
(72) Erfinder: PÖSS, Hans-Joachim, D-63571 Gelnhausen (DE)
(74) Vertreter: Neunert, Peter Andreas
(86) Internationale Anmeldenummer: DE9701924
(87) Internationale Veröffentlichungsnummer: WO9812718

(56) Entgegenhaltungen:
- EP-A- 0 057 832
- EP-A- 0 387 841
- DE-U- 9 417 708
- TOPPETO A A: "APPLICATION AND EVALUATION OF EMI POWER LINE FILTERS" INTERNATIONAL SYMPOSIUM ON ELECTROMAGNETIC COMPATIBILITY, ATLANTA, AUG. 25 - 27, 1987, Nr. -, 25.August 1987, INSTITUTE OF ELECTRICAL AND ELECTRONICS ENGINEERS, Seiten 164-167, XP002009783

## Beschreibung

Die Erfindung betrifft eine stromkompensierte Funkentstördrossel mit konstruktiven Maßnahmen zur Erhöhung der Streuinduktivität und mit mindestens zwei vom Betriebsstrom durchflossenen Wicklungen, deren Wicklungssinn so gewählt ist, daß sich die durch den Betriebsstrom induzierten Magnetfelder gegenseitig kompensieren, während Erdströme, die sich über Eigenkapazitäten zur Erde schließen, sich ergänzende Magnetfelder erzeugen, wobei jede der Wicklungen auf je einen in sich geschlossenen Kern aus weichmagnetischem Material gewickelt ist und die mit den Wicklungen versehenen Kerne miteinander über je eine Koppelwicklung verbunden sind.

Eine derartige Funkentstördrossel ist aus der DE-A 195 15 494 beschrieben.

Aufgabe dieser stromkompensierten Drossel ist es, gegenüber dem Betriebsstrom höherfrequente Störströme zu dämpfen. Hierbei unterscheidet man erdunsymmetrische Ströme, die sich über Eigenkapazitäten der Leitungen und des Verbrauchers zur Erde schließen. Diese Ströme erzeugen in sich geschlossenen Kernen aus weichmagnetischem Material Magnetfelder, die sich ergänzen, so daß die Kerne mit der Frequenz dieser Störströme ummagnetisiert werden und somit für diese Störströme eine starke Drosselwirkung haben. Ferner können auch Störströme auftreten, die -wie der Betriebsstrom- durch die Zuleitungen über den Verbraucher zurück zum Netz fließen. Diese Störströme fließen durch die Wicklungen auf den Kernen in gleicher Weise wie der Betriebsstrom, so daß sich deren Magnetfelder in den Kernen aufheben. Um auch hier eine Dämpfung zu erreichen, ist beispielsweise in der Umgebung der Kerne magnetisch leitendes Material vorgesehen, so daß die Streuinduktivität der aus den Kernen mit den Wicklungen bestehenden stromkompensierten Drossel erhöht wird und so auch eine Dampfung der den Betriebsstrom überlagerten erdsymmetrischen Ströme erzielt wird.

Aufgabe der vorliegenden Erfindung ist es, eine Anordnung für eine derartige stromkompensierte Drossel anzugeben, die eine weitere Verbesserung der Dämpfung der sich über Erde schließenden Störströme (Differential Mode) erbringt.

Die Lösung besteht erfindungsgemäß darin, daß die Koppelwicklung zusätzlich zu den mit vom Betriebsstrom durchflossenen Wicklungen versehenen Kernen zur weiteren Erhöhung der Streuinduktivität zwei oder mehrere in sich geschlossene Zusatzkerne aus weichmagnetischem Material umschließt oder von zumindest einem in sich geschlossenen Zusatzkern aus weichmagnetischem Material umschlossen ist.

Hierdurch ergibt sich der besondere Vorteil, daß diese Zusatzkerne nur dann ummagnetisiert werden, wenn die Summe der durch die Wicklungen in der Koppelwicklung erzeugten Felder nicht 0 ist.

Weiterbildungen der Erfindung sind Gegenstand der Unteransprüche.

Die Erfindung ist in der Zeichnung beispielsweise veranschaulicht und im nachstehenden im einzelnen anhand der Zeichnung beschrieben. Es zeigen:
- Figur 1: eine stromkompensierte Funktentstördrossel für einen einphasigen Verbraucher mit zwei in sich geschlossenen Zusatzkernen, die die Koppelwicklung umschließen,
- Figur 2: eine stromkompensierte Funktentstördrossel für einen einphasigen Verbraucher mit einem in sich geschlossenen Zusatzkern, der die Koppelwicklung umschließt und

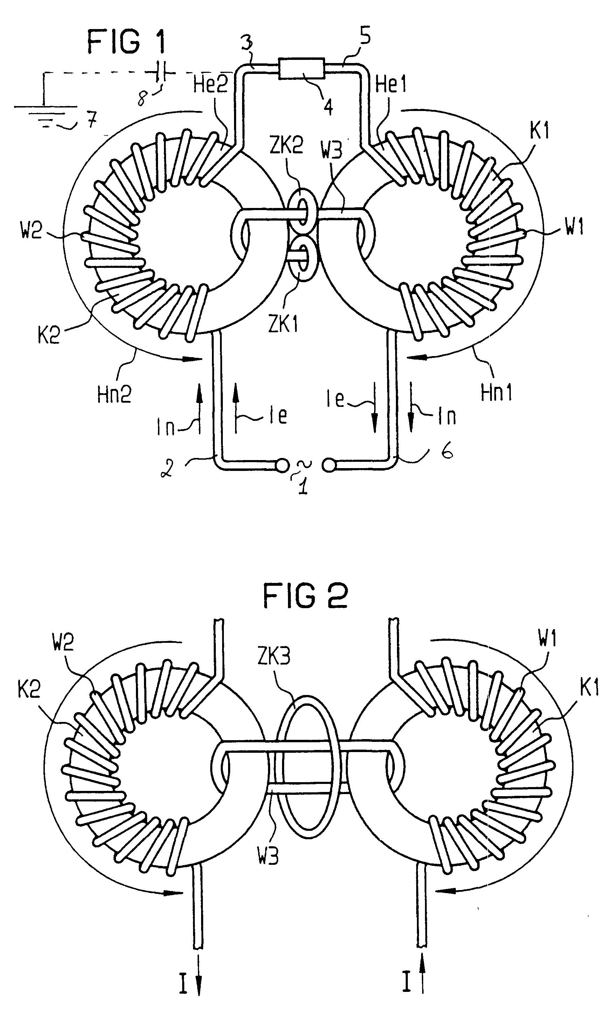

In Figur 1 ist eine Wechselspannungsquelle 1 über eine Leitung 2, eine Wicklung W2 und eine Leitung 3 an einen als Widerstand dargestellten Verbraucher 4 angeschlossen. Die Rückleitung vom Verbraucher 4 zum anderen Pol der Wechselspannungsquelle erfolgt über eine Leitung 5, eine Wicklung W1 sowie eine Leitung 6. Die Wicklungen W1 und W2 sind die Wicklungen einer stromkompensierten Drossel. Dabei ist die Wicklung W1 auf einen Kern K1 und die Wicklung W2 auf einen Kern K2 aufgewickelt. Die Kerne sind miteinander über eine kurzgeschlossene Koppelwicklung W3 verbunden, die aus einer oder mehreren Windungen bestehen kann und vorteilhafterweise auch als Steckverbindung von U-förmigen oder halbkreisförmigen Massivteilen ausgeführt werden kann. Zwischen der Leitung 3 und Erde 7 ist über gestrichelte Linien ein Kondensator 8 angedeutet, der beispielsweise die Eigenkapazität des Verbrauchers 4 mit den angeschlossenen Leitungen 3 und 5 darstellt.

Ferner umschließt die Koppelwicklung W3 zusätzlich zu den mit vom Betriebsstrom durchflossenen Wicklungen W1 und W2 versehenen Kernen K1 und K2 zwei in sich geschlossene Zusatzkerne ZK1 und ZK2, die ebenfalls wie die Kerne K1 und K2 aus weichmagnetischem Material bestehen.

Die Funktionsweise dieser Anordnung ist folgende: Der Betriebsstrom Iₙ fließt -beispielsweise in einer bestimmten Halbwelle- in der durch einen Pfeil angegebenen Richtung über die Leitung 2 durch die Wicklung W2 und die Leitung 3 zum Verbraucher 4. Dabei wird das Feld Hₙ₂ erzeugt. Der vom Verbraucher zurückfließende Strom Iₙ fließt dann in der ebenfalls durch Pfeil angegebenen Richtung durch die Wicklung W1 und die Leitung 6 zur Wechselspannungsquelle 1 zurück. Dabei entsteht das Feld Hₙ₁ im Kern K1 und das Feld Hₙ₂ im Kern K2. Diese Felder bewirken eine Magnetfeldänderung im Inneren der Koppelwicklung W3 und erzeugen damit in dieser Wicklung einen Strom, der wegen des geringen Widerstandes ein den Feldern Hₙ₁ und Hₙ₂ entgegengesetzt gerichtetes Magnetfeld in den Kernen K1 und K2 erzeugt, so daß tatsächlich in keinem der Kerne ein nennenswertes Feld aufgebaut wird.

Wird jetzt im Betriebsstrom Iₙ durch äußere Störeinflüsse ein in gleicher Weise fließender Strom überlagert, der sich vom Betriebsstrom nur durch eine höhere Frequenz unterscheidet, so treten bei gleicher Polarität die gleichen Feldrichtungen auf.

In Bezug auf den hochfrequenten Störstrom macht sich in der Koppelwicklung W3 jedoch der Skineffekt bemerkbar, d.h. der Widerstand der Koppelwicklung W3 ist in Bezug auf hochfrequente Störströme größer als in Bezug auf den relativ niederfrequenten Betriebsstrom. Der so erhöhte Widerstand der Koppelwicklung W3 bewirkt, daß in der Wicklung eine höhere Spannung induziert werden muß, als dies beim Betriebsstrom der Fall ist. Die Spannung bedingt aber eine Magnetfeldänderung im Inneren der Koppelwicklung W3 mit der Frequenz des Störstromes, so daß beide Wicklungen W1 und W2 in Bezug auf den Störstrom eine wesentlich höhere Drosselwirkung haben als in Bezug auf den Betriebsstrom.

Es kommt hinzu, daß die voneinander abgewandten Seiten der beiden Kerne K1 und K2 mit den Wicklungen W1 und W2 versehen sind. Dieser Abstand zwischen den Wicklungen vermindert deren Kopplung, so daß die Gesamtanordnung -auch durch die konstruktive Ausgestaltung- eine Erhöhung der Streuinduktivität erfährt.

Die Streuinduktivität wird aber entscheidend dadurch erhöht, daß die Koppelwicklung W3 zusätzlich zu den mit vom Betriebsstrom durchflossenen Wicklungen W1 und W2 versehenen Kernen K1 und K2 zwei in sich geschlossene Zusatzkerne ZK1 und ZK2 umschließt.

In Figur 2 ist im Prinzip die selbe Anordnung wie in Figur 1 gezeigt, wobei hier die Koppelwicklung W3 von einem in sich geschlossenen Zusatzkern ZK3 umschlossen ist.

Hierdurch ergibt sich bei beiden gezeigten Anordnungen der besondere Vorteil, daß diese Zusatzkerne nur dann ummagnetisiert werden, wenn die Summe der durch die Wicklungen W1, W2 in der Koppelwicklung W3 erzeugten Felder nicht 0 ist.

Für die Erdströme, von denen die Polarität einer Halbwelle durch die mit Iₑ bezeichneten Pfeile gekennzeichnet ist, ergeben sich -da sie über die Eigenkapazität (Kondensator 8) zur Erde fließen- die mit Hₑ₁ und Hₑ₂ gekennzeichneten Feldverläufe in den Kernen K1 und K2. Man sieht, daß diese Felder innerhalb der Koppelwicklung W3 jeweils unterschiedliche Richtungen haben, so daß die gesamte Feldänderung im Inneren der Koppelwicklung W3 0 ist. Die Koppelwicklung behindert also in diesem Fall nicht die Ausbildung von Magnetfeldern in den Kernen K1 und K2, so daß eine relativ hohe Dämpfung dieser sich über Erde schließenden Ströme vorhanden ist.

## Patentansprüche

1. Stromkompensierte Funkentstördrossel mit konstruktiven Maßnahmen zur Erhöhung der Streuinduktivität und mit mindestens zwei vom Betriebsstrom durchflossenen Wicklungen (W1, W2), deren Wicklungssinn so gewählt ist, daß sich die durch den Betriebsstrom (Iₙ) induzierten Magnetfelder (Hₙ₁, Hₙ₂) gegenseitig kompensieren, während Erdströme (Iₑ), die sich über Eigenkapazitäten zur Erde schließen, sich ergänzende Magnetfelder (H₁ₑ, H₂ₑ) erzeugen, wobei jede der Wicklungen (W1, W2) auf je einen in sich geschlossenen Kern (K1, K2) aus weichmagnetischem Material gewickelt ist und die mit den Wicklungen (W1, W2) versehenen Kerne (K1, K2) miteinander über je eine Koppelwicklung (W3) verbunden sind,
**dadurch gekennzeichnet, daß** die Koppelwicklung (W3) zusätzlich zu den mit vom Betriebsstrom (Iₙ) durchflossenen Wicklungen (W1, W2) versehenen Kernen (K1, K2) zur weiteren Erhöhung der Streuinduktivität zwei oder mehrere in sich geschlossene Zusatzkerne (ZK1, ZK2) umschließt.

2. Stromkompensierte Funkentstördrossel mit konstruktiven Maßnahmen zur Erhöhung der Streuinduktivität und mit mindestens zwei vom Betriebsstrom durchflossenen Wicklungen (W1, W2), deren Wicklungssinn so gewählt ist, daß sich die durch den Betriebsstrom (Iₙ) induzierten Magnetfelder (Hₙ₁, Hₙ₂) gegenseitig kompensieren, während Erdströme (Iₑ), die sich über Eigenkapazitäten zur Erde schließen, sich ergänzende Magnetfelder (H₁ₑ, H₂ₑ) erzeugen, wobei jede der Wicklungen (W1, W2) auf je einen in sich geschlossenen Kern (K1, K2) aus weichmagnetischem Material gewickelt ist und die mit den Wicklungen (W1, W2) versehenen Kerne (K1, K2) miteinander über je eine Koppelwicklung (W3) verbunden sind,
**dadurch gekennzeichnet, daß** die Koppelwicklung (W3) von zumindest einem in sich geschlossenen Zusatzkern (ZK3) aus weichmagnetischem Material umschlossen ist.

3. Stromkompensierte Funkentstördrossel nach Anspruch 1 oder 2,
**dadurch gekennzeichnet, daß** die Zusatzkerne (ZK1, ZK2; ZK3) wicklungsfrei sind.

4. Stromkompensierte Funkentstördrossel nach einem der Ansprüche 1 bis 3,
**dadurch gekennzeichnet, daß** die in sich geschlossenen Kerne (K1, K2) und/oder die in sich geschlossenen Zusatzkerne (ZK1, ZK2; ZK3) aus weichmagnetischen Blechen gewickelte Ringbandkerne sind.

5. Stromkompensierte Funkentstördrossel nach Anspruch 4,
**dadurch gekennzeichnet, daß** die weichmagnetischen Bleche aus einer amorphen oder nanokristallinen Legierung bestehen.

6. Stromkompensierte Funkentstördrossel nach einem der Ansprüche 1 bis 5,
**dadurch gekennzeichnet, daß** die in sich geschlossenen Kerne (K1, K2) durch die Koppelwicklung (W3) dicht nebeneinander gehalten werden, und daß die vom Betriebsstrom (Iₙ) durchflossenen Wicklungen (W1, W2) auf den der Koppelwicklung (W3) abgewandten Seiten der Kerne (K1, K2) aufgewickelt sind.

7. Stromkompensierte Funkentstördrossel nach einem der Ansprüche 1 bis 6,
**dadurch gekennzeichnet**, die Koppelwicklung (W3) aus ineinander gesteckten massiven Kupferteilen besteht.

## Claims

1. Current-compensated radio-interference suppression reactor with design measures for increasing leakage inductance and with at least two windings (W1, W2) through which the operating current flows and the winding sense of which is selected in such a manner that the magnetic fields (Hₙ₁, Hₙ₂) induced by the operating current (Iₙ) are mutually compensating, while earth currents (Iₑ) connected to earth by means of inherent capacitance generate complementary magnetic fields (H₁ₑ, H₂ₑ), each of the windings (W1, W2) being wound on to a respective closed core (K1, K2) made of soft-magnetic material and the cores (K1, K2) provided with the windings (W1, W2) being connected together by means of a coupling winding (W3), **characterised in that** the coupling winding (W3) surrounds two or more closed additional cores (ZK1, ZK2) in addition to the cores (K1, K2) provided with the windings (W1, W2) through which the operating current (Iₙ) flows in order to further increase leakage inductance.

2. Current-compensated radio-interference suppression reactor with design measures for increasing leakage inductance and with at least two windings (W1, W2) through which the operating current flows and the winding sense of which is selected in such a manner that the magnetic fields (Hₙ₁, Hₙ₂) induced by the operating current (Iₙ) are mutually compensating, while earth currents (Iₑ) connected to earth by means of inherent capacitance generate complementary magnetic fields (H₁ₑ, H₂ₑ), each of the windings (W1, W2) being, wound on to a respective closed core (K1, K2) made of soft-magnetic material and the cores (K1, K2) provided with the windings (W1, W2) being connected together by means of a coupling winding (W3), **characterised in that** the coupling winding (W3) is surrounded by at least one closed additional core (ZK3) made of soft-magnetic material.

3. Current-compensated radio-interference suppression reactor according to claim 1 or claim 2, **characterised in that** the additional cores (ZK1, ZK2; ZK3) have no windings.

4. Current-compensated radio-interference suppression reactor according to one of claims 1 to 3, **characterised in that** the closed cores (K1, K2) and/or the closed additional cores (ZK1, ZK2; ZK3) are toroidal strip-wound cores made from soft-magnetic sheets.

5. Current-compensated radio-interference suppression reactor according to claim 4, **characterised in that** the soft-magnetic sheets consist of an amorphous or nanocrystalline alloy.

6. Current-compensated radio-interference suppression reactor according to one of claims 1 to 5, **characterised in that** the closed cores (K1, K2) are held close together by the coupling winding (W3) and that the windings (W1, W2) through which the operating current (Iₙ) flows are wound on to the sides of the cores (K1, K2) directed away from the coupling winding (W3).

7. Current-compensated radio-interference suppression reactor according to one of claims 1 to 6, **characterised in that** the coupling winding (W3) consists of solid copper parts fitted into one another.

## Revendications

1. Bobine d'antiparasitage à compensation de courant comprenant des mesures de construction pour augmenter l'inductance de fuite et comprenant au moins deux enroulements (W1, W2) dans lequel passe le courant de fonctionnement, dont le sens d'enroulement est choisi de façon que les champs (Hₙ₁, Hₙ₂) magnétiques induits par le courant (Iₙ) de fonctionnement se compensent mutuellement, tandis que des courants (Iₑ) de terre, qui se ferment sur la terre par des capacités propres, produisent des champs (H₁ₑ, H₂ₑ) magnétiques qui se complètent, chacun des enroulements (W1, W2) étant enroulé respectivement sur un noyau (K1, K2) fermé sur soi-même en matériau magnétique doux, et les noyaux (K1, K2) munis des enroulements (W1, W2) étant reliés entre eux par respectivement un enroulement (W3) de couplage,
**caractérisée en ce que** l'enroulement (W3) de couplage entoure, en plus des noyaux (K1, K2) munis des enroulements (W1, W2) dans lesquels passe le courant (Iₙ) de fonctionnement, pour augmenter davantage l'inductance de fuite, deux noyaux (ZK1, ZK2) supplémentaires ou plusieurs noyaux (ZK1, ZK2) supplémentaires fermés sur eux-mêmes.

2. Bobine d'antiparasitage à compensation de courant comprenant des mesures de construction pour augmenter l'inductance de fuite et comprenant au moins deux enroulements (W1, W2) dans lequel passe le courant de fonctionnement, dont le sens d'enroulement est choisi de façon que les champs (Hₙ₁, Hₙ₂) magnétiques induits par le courant (Iₙ) de fonctionnement se compensent mutuellement, tandis que des courants (Iₑ) de terre, qui se ferment sur la terre par des capacités propres, produisent des champs (H₁ₑ, H₂ₑ) magnétiques qui se complètent, chacun des enroulements (W1, W2) étant enroulé respectivement sur un noyau (K1, K2) fermé sur soi-même en matériau magnétique doux, et les noyaux (K1, K2) munis des enroulements (W1, W2) étant reliés entre eux par respectivement un enroulement (W3) de couplage,
**caractérisée en ce que** l'enroulement (W3) de couplage est entouré d'au moins un noyau (ZK3) supplémentaire fermé sur soi-même, en matériau magnétique doux.

3. Bobine d'antiparasitage à compensation de courant suivant la revendication 1 ou 2, **caractérisée en ce que** les noyaux (ZK1, ZK2, ZK3) supplémentaires sont sans enroulement.

4. Bobine d'antiparasitage à compensation de courant suivant l'une des revendications 1 à 3, **caractérisée en ce que** les noyaux (K1, K2) fermés sur eux-mêmes et/ou les noyaux (ZK1, ZK2, ZK3) supplémentaires fermés sur eux-mêmes, sont des noyaux à bande annulaire enroulés en tôles à magnétisme doux.

5. Bobine d'antiparasitage à compensation de courant suivant la revendication 4, **caractérisée en ce que** les tôles à magnétisme doux sont en un alliage amorphe ou nanocristallin.

6. Bobine d'antiparasitage à compensation de courant suivant l'une des revendications 1 à 5, **caractérisée en ce que** les noyaux (K1, K2) se fermant sur eux-mêmes sont maintenus étroitement les uns contre les autres par l'enroulement (W3) de couplage, et **en ce que** les enroulements (W1, W2) dans lesquels passe le courant (Iₙ) de fonctionnement sont enroulés sur les côtés des noyaux (K1, K2), qui sont éloignés de l'enroulement (W3) de couplage.

7. Bobine d'antiparasitage à compensation de courant suivant l'une des revendications 1 à 6, **caractérisée en ce que** l'enroulement (W3) de couplage est constitué de pièces de cuivre pleines enfilées les unes dans les autres.
